# EUROPEAN PATENT APPLICATION

(11) **EP 4 586 200 A1**
(43) Date of publication of application: **16.07.2025**
(21) Application number: 25150640.8
(22) Date of filing: 08.01.2025
(51) Int. Cl.: G06T 11/60

(54) **METHOD AND SYSTEM FOR GENERATING COMPOSITE IMAGE**

(30) Priority: 09.01.2024 KR 20240003391
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); HEO, Hoyeong, 06038 Seoul (KR); JO, Hanseok, 06038 Seoul (KR)
(74) Representative: Studio Torta S.p.A.

(57) **Abstract**

The present disclosure relates to an image generation method performed by at least one processor. The image generation method may include: receiving an input image including a background and a specific object; extracting at least one piece of content information about the input image; and generating a composite image of a specific domain style associated with the at least one piece of content information by using an image generation model.

## Description

### TECHNICAL FIELD

The present disclosure relates to a method and system for generating a composite image, and more particularly, to a method and system for generating a composite image of a specific domain style based on content information extracted from an input image.

### BACKGROUND

AI technology is a technology that uses machine learning and deep learning technologies to learn large amounts of data, recognize patterns, and develop systems that make intelligent decisions, and is being innovatively utilized in various fields such as prediction analysis, autonomous driving, medical diagnosis, language processing, and image generation. In particular, AI-based image generation technology is a technology that generates new images based on inputs such as text, and is making innovative progress with the advancement of deep learning technology and generative models.

Meanwhile, AI technology is also being utilized in various ways in the defense industry. For example, AI technology may be utilized in various application fields such as military operations, threat detection, training and simulation, and drone systems. However, there is a severe shortage of training data for training AI models used in the defense industry. As such, there is a problem that it is difficult to secure a sufficient amount of actual training data required for training AI models, and even if secured, it costs a lot and takes a long time.

### SUMMARY

To solve the above problem, the present disclosure provides a method and system for generating a composite image.

The present disclosure may be implemented in various ways, such as a method, a device (system), and a non-transitory computer-readable recording medium storing instructions.

According to an embodiment of the present disclosure, a method performed by at least one processor for generating a composite image may include: receiving an input image including a background and a specific object; extracting at least one piece of content information about the input image; and generating a composite image of a specific domain style associated with the at least one piece of content information by using an image generation model.

According to an embodiment of the present disclosure, receiving an input image may include: receiving a first image associated with the background; receiving a second image associated with the specific object; and generating the input image by merging the first image and the second image.

According to an embodiment of the present disclosure, receiving an input image may include: receiving background information associated with the background; receiving object information associated with the specific object; and generating the input image based on the background information and the object information by using an artificial neural network model.

According to an embodiment of the disclosure, the object information may include at least one of object type information, object shape information, object location information, or object posture information.

According to an embodiment of the present disclosure, the content information may represent structural information of the background and objects in the input image.

According to an embodiment of the present disclosure, the at least one piece of content information may include at least one of semantic segmentation information, panoptic segmentation information, instance segmentation information, segmentation anything model

(SAM) result information, bounding box information, edge information, depth information, or sketch information.

According to an embodiment of the present disclosure, extracting at least one piece of content information may include extracting multiple different pieces of content information about the input image; and generating a composite image may include generating the composite image based on the multiple different pieces of content information by using the image generation model.

According to an embodiment of the present disclosure, the multiple different pieces of content information may include first content information, second content information, and third content information; and generating the composite image based on the multiple different pieces of content information may include encoding the first content information to generate first encoded data, encoding the second content information to generate second encoded data, encoding the third content information to generate third encoded data, and generating the composite image of the specific domain style by inputting the first encoded data, the second encoded data, and the third encoded data to the image generation model.

According to an embodiment of the present disclosure, the first content information may be semantic segmentation information; the second content information may be sketch information; and the third content information may be edge information.

According to an embodiment of the present disclosure, a domain style of the background and a domain style of the specific object included in the input image may be different from each other.

According to an embodiment of the present disclosure, at least one of a domain style of the background and a domain style of the specific object included in the input image may be different from the domain style of the composite image.

According to an embodiment of the present disclosure, the method may further include training the image generation model. Training the image generation model may include: receiving a training image of the specific domain style; extracting at least one piece of content information about the training image; and training the image generation model by using a pair composed of the training image and the at least one piece of content information as training data.

According to an embodiment of the present disclosure, the specific domain style may be an infrared (IR) domain style.

According to an embodiment of the present disclosure, the specific object may be an object associated with the defense industry.

There is provided a computer-readable non-transitory recording medium that stores instructions configured to execute the method according to an embodiment of the present disclosure on a computer.

An information processing system according to an embodiment of the present disclosure may include: a communication module; a memory; and a processor connected to the memory and configured to execute at least one computer-readable program stored in the memory, wherein the at least one computer-readable program may include instructions that are configured to: receive an input image including a background and a specific object; extract at least one piece of content information about the input image; and generate a composite image of a specific domain style associated with the at least one piece of content information by using an image generation model.

According to some embodiments of the present disclosure, the processor may generate input images for nearly infinite desired scenarios by combining various specific object images and background images related to the defense industry and through detailed settings for objects and backgrounds to be included in the input images.

According to some embodiments of the present disclosure, the processor may generate an IR-style composite image based on an input image. Composite images generated in this way may be used as training data for AI models used in the defense industry (e.g., anti-drone system (ADS), autonomous weapon system, national security system). Hence, the problem of difficulty in obtaining a sufficient amount of real images required for training AI models in the defense industry may be solved at low cost and in a short period of time.

According to some embodiments of the present disclosure, the image generation model may generate a high-quality composite image that is not dependent on only one content information by extracting multiple pieces of content information of different formats/types from one training image. In addition, it is possible to generate a composite image that reflects various content information ranging from high-level structural information to low-level structural information.

According to some embodiments of the present disclosure, the image generation model may be trained to generate composite images of a specific domain style (e.g., IR style) by taking content information as input. Accordingly, the image generation model may generate IR-style composite images similar to those captured directly by military infrared cameras.

The effects of the present disclosure are not limited to those mentioned above, and other effects not mentioned may be clearly understood by a person having ordinary skill in the art to which the present disclosure belongs ("ordinary person skilled in the art") from the description of the claims.

### BRIEF DESCRIPTION OF DRAWINGS

Embodiments of the present disclosure will be described below with reference to the accompanying drawings, in which like reference symbols represent similar elements, without being limited thereto.
FIG. 1 is a diagram illustrating an example of generating a composite image based on an input image according to an embodiment of the present disclosure.
FIG. 2 is a schematic diagram showing a configuration in which an information processing system is connected to a plurality of user terminals to generate a composite image according to an embodiment of the present disclosure.
FIG. 3 is a block diagram showing the internal structure of the user terminal and the information processing system according to an embodiment of the present disclosure.
FIG. 4 is a diagram illustrating an example of a method for generating input images by merging object images and background images according to an embodiment of the present disclosure.
FIG. 5 is a diagram illustrating an example of a method for generating input images by using an artificial neural network model according to another embodiment of the present disclosure.
FIG. 6 is a diagram illustrating an example of training an image generation model according to an embodiment of the present disclosure.
FIG. 7 is a diagram illustrating an example of training an image generation model according to an embodiment of the present disclosure.
FIG. 8 is a diagram showing an example of an artificial neural network model according to an embodiment of the present disclosure.
FIG. 9 is a diagram illustrating an example of a composite image generated from an input image according to an embodiment of the present disclosure.
FIG. 10 is a flowchart illustrating an example of an image generation method according to an embodiment of the present disclosure.

### DETAILED DESCRIPTION

Hereinafter, specific details for carrying out the present disclosure will be described in detail with reference to the accompanying drawings. However, in the following description, detailed descriptions of well-known functions or configurations will be omitted if there is a risk of unnecessarily obscuring the subject matter of the present disclosure.

In the accompanying drawings, identical or corresponding elements are given the same reference symbols. Additionally, in the following description of the embodiments, repeated descriptions of identical or corresponding components may be omitted. However, even if a description of a specific component is omitted, it is not intended that such a component is not included in a corresponding embodiment.

Advantages and features of the disclosed embodiments and methods for achieving them will become clear by referring to the embodiments described below in conjunction with the accompanying drawings. However, the present disclosure is not limited to the embodiments disclosed below and may be implemented in various different forms, and these embodiments are provided only to make the present disclosure complete and fully inform those skilled in the art of the scope of the present disclosure.

Terms used in this specification will be briefly described, and the disclosed embodiments will be described in detail. The terms used in this specification are selected as being general terms currently widely used as much as possible while considering their functions in the present disclosure, but they may vary depending on the intentions of engineers working in the related fields, precedents, the emergence of new technologies, or the like. Additionally, there may be terms deliberately selected by the applicants, and in such a case, their meanings will be described in detail in the description of the relevant invention. Accordingly, the terms used in this disclosure should be defined based on the meanings of the terms and the overall content of the present disclosure, rather than simply the names of the terms.

In this specification, singular expressions include plural expressions, unless the context clearly indicates otherwise. Also, plural expressions include singular expressions, unless the context clearly indicates otherwise. In the entire specification, when a part includes a specific component, this means that other components may be further included rather than excluding other components unless expressly stated to the contrary.

In addition, the term 'module' or 'unit' used in the specification refers to a software or hardware component, and the 'module' or 'unit' performs specific roles. However, the 'module' or 'unit' is not limited to software or hardware. A 'module' or 'unit' may be configured to reside on an addressable storage medium and may be configured to drive one or more processors. Thus, as an example, a 'module' or 'unit' may include at least one of components such as software components, object-oriented software components, class components and task components, processes, functions, attributes, procedures, subroutines, program code segments, drivers, firmware, microcode, circuits, data, databases, data structures, tables, arrays, or variables. Components and modules or units may be combined into a smaller number of larger ones or may be divided into a larger number of smaller ones, while maintaining the same functionality.

According to an embodiment of the present disclosure, a 'module' or 'unit' may be implemented with a processor and a memory. The term 'processor' should be interpreted broadly to include a general-purpose processor, central processing unit (CPU), microprocessor, digital signal processor (DSP), controller, microcontroller, state machine, and the like. In some contexts, the 'processor' may refer to an application-specific integrated circuit (ASIC), programmable logic device (PLD), field programmable gate array (FPGA), or the like. The 'processor' may refer to, for example, a combination of a DSP and a microprocessor, a combination of plural microprocessors, a combination of one or more microprocessors coupled with a DSP core, or a combination of other processing devices. In addition, the term 'memory' should be interpreted broadly to include any electronic component capable of storing electronic information. The 'memory' may refer to various types of processor-readable media such as random access memory (RAM), read-only memory (ROM), non-volatile random access memory (NVRAM), programmable read-only memory (PROM), erasable-programmable read-only memory (EPROM), electrically erasable PROM (EEPROM), flash memory, magnetic or optical data storage, and registers. A memory is said to be in electronic communication with a processor if the processor can read information from the memory and/or write information to the memory. The memory integrated into a processor is in electronic communication with the processor.

In the present disclosure, the term 'system' may include, but not limited to, at least one of a server device and a cloud device. For example, a system may be composed of one or more server devices. As another example, a system may be composed of one or more cloud devices. As another example, a system may be configured to operate together with a server device and a cloud device.

In the present disclosure, the term 'display' may refer to any display device associated with a computing device. For example, it may refer to a specific display device that is controlled by the computing device or is capable of displaying information/data provided by the computing device.

In the present disclosure, "each of a plurality of A's" may refer to each of all components included in plural A's or may refer to each of some components included in plural A's.

In the present disclosure, a "neural network model" may refer to a model including at least one artificial neural network composed of an input layer, multiple hidden layers, and an output layer, for inferring an answer for a given input. Here, each layer may include multiple nodes.

In the present disclosure, "content information" may be information representing the background and/or structural information of objects in an image (e.g., category information, shape information, location information of an object). For example, the content information may include semantic segmentation information, panoptic segmentation information, instance segmentation information, segmentation anything model (SAM) result information, bounding box information, edge information (e.g., Canny edge information), and depth information.

In the present disclosure, "domain style" refers to the visual characteristics and/or artistic style of an image, and may represent a unique combination of the FOV (field of view) and parameters of the camera that has captured the image, the color, texture, pattern, and shape of the image, and other visual elements that define the overall appearance and aesthetic quality of the image. For example, the domain style of an image may include a virtual domain style such as computer graphics (e.g., computer game graphics), and a real-world domain style such as a real-world thing captured by a specific camera. When there are different cameras capturing the real world (e.g., RGB camera, IR camera, thermal imaging camera), the images captured by the cameras may have different domain styles depending on the various characteristics of the cameras.

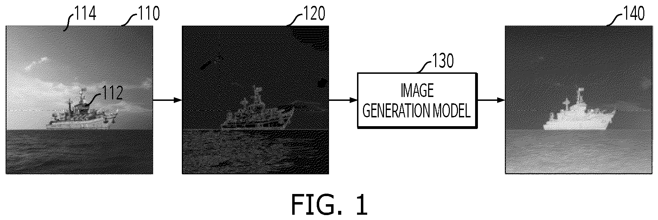

FIG. 1 is a diagram illustrating an example of generating a composite image 140 based on an input image 110 according to an embodiment of the present disclosure. In an embodiment, the processor may generate an input image 110. Specifically, the input image 110 may include a specific object image 112 and a background image 114. Here, the specific object image 112 may be an image of an object related to the defense industry (e.g., battleship, fighter plane, tank, or helicopter). Additionally, the background image 114 may be an image of a background (e.g., sea or sky) to be combined with the specific object image 112.

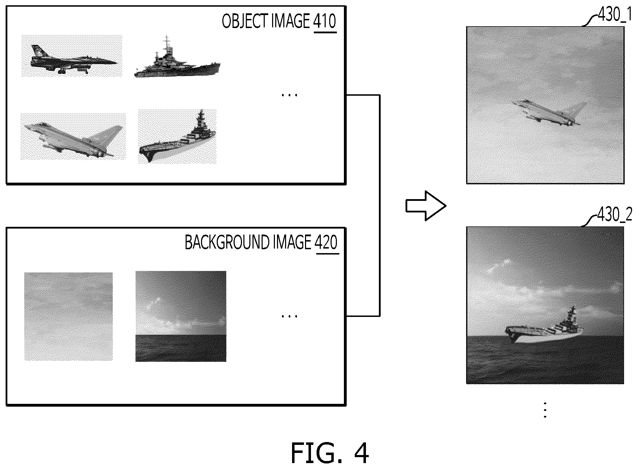

In an embodiment, the processor may generate an input image 110 by merging a specific object image 112 and a background image 114. Specifically, the processor may receive a specific object image 112 and a background image 114, and merge the received images 112 and 114 to generate an input image 110. A detailed description will be given of an example of a method for generating the input image 110 by merging the specific object image 112 and the background image 114 with reference to FIG. 4.

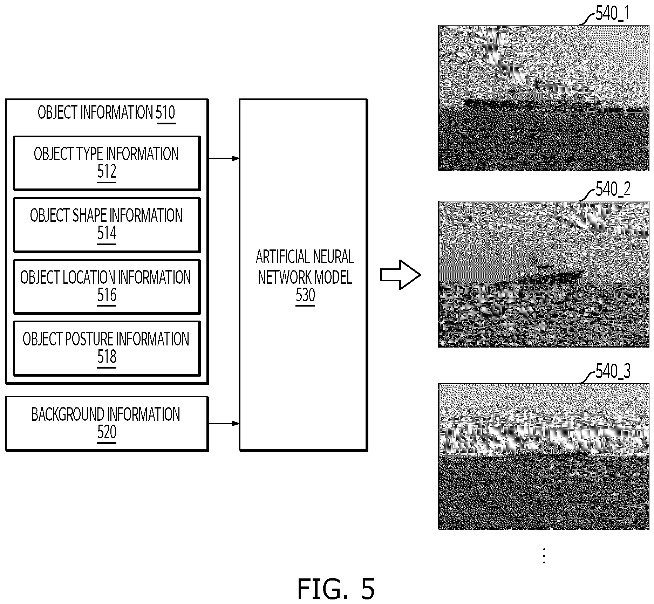

Alternatively, the processor may generate the input image 110 by using an artificial neural network model. Specifically, the processor may receive object information related to a specific object in the input image 110 to be generated. In addition, the processor may receive background information related to the background in the input image 110 to be generated. Thereafter, the processor may generate the input image 110 based on the received object information and/or background information by using an artificial neural network model. For example, the artificial neural network model may generate the input image 110 that includes a specific object image 112 associated with the received object information and a background image 114 associated with the received background information. An example of a method for generating an input image 110 by using an artificial neural network model will be described in detail with reference to FIG. 5.

In an embodiment, the domain styles of the specific object image 112 and the background image 114 included in the input image 110 may be different from each other. For example, For example, the specific object image 112 may be a virtual image generated through a computer game or computer simulation, and the background image 114 may be a real image such as an actual image captured by a camera in an actual environment. In addition, the input image 110 may include the specific object image 112 and background image 114 of various domain styles (e.g., cartoon image style, pointillism image style, hand-drawn image style, or the like). Alternatively, the domain styles of the specific object image 112 and the background image 114 included in the input image 110 may be identical.

In an embodiment, the processor may extract at least one piece of content information 120 from the input image 110. Here, the content information 120 may represent structural information of the background and object included in the input image 110. For example, the at least one piece of content information 120 may include at least one of semantic segmentation information, panoptic segmentation information, instance segmentation information, SAM result information, bounding box information, edge information, depth information, or sketch information.

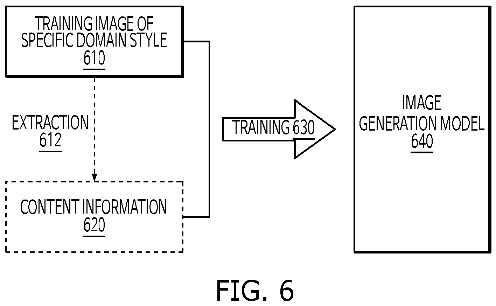

In an embodiment, the processor may extract multiple different pieces of content information 120 from the input image 110. The multiple different pieces of content information 120 may include at least two pieces of the content information 120 described above. In FIG. 1, for convenience of explanation, multiple pieces of content information 120 extracted from the input image 110 are visualized on a single image in an overlapping form, but each piece of content information 120 may be present as an independent layer. An example of extracting content information 120 from the input image 110 will be described in detail with reference to FIG. 6.

In an embodiment, the image generation model 130 may generate a composite image 140 of a specific domain style (e.g., infrared (IR) domain style). Specifically, the image generation model 130 may generate a composite image 140 based on at least one piece of content information 120 extracted from the input image 110.

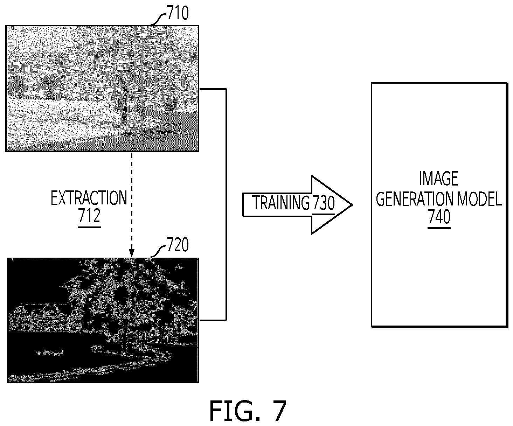

In an embodiment, the image generation model 130 may be an artificial neural network model trained by using a pair composed of a training image of a specific domain style and content information extracted from the training image of a specific domain style as training data. Hence, the image generation model 130 may be trained with the content information 120 as input to generate a composite image 140 of a specific domain style. An example of a method for training the image generation model 130 is described in detail with reference to FIGS. 6 and 7.

The domain style of the composite image 140 generated by the image generation model 130 may be different from the domain style of the input image 110. Specifically, at least one of the domain styles of the specific object image 112 and background image 114 included in the input image 110 may be different from the domain style of the composite image 140. For example, the specific object image 112 may be a cartoon style image, the background image 114 may be an oil painting style image, and the composite image 140 may be an infrared (IR) style image.

In an embodiment, the specific domain style may be an IR style. In this case, the image generation model 130 may generate a composite image 140 similar to an image captured by an infrared camera. Thereby, the processor may generate an IR-style composite image 140 similar to an image actually captured by a military camera.

Through this configuration, the processor may generate input images 110 for a nearly infinite number of desired scenarios by combining specific object images 112 and background images 114 related to the defense industry in various ways. In addition, the processor may generate IR style composite images 140 based on the generated input images 110. These composite images 140 generated in this way may be used as training data for Al models usable in the defense industry (e.g., anti-drone system (ADS), autonomous weapon system, or national security system). Consequently, the problem of difficulty in obtaining a sufficient amount of real images required for training AI models in the defense industry can be solved at low cost and in a short period of time.

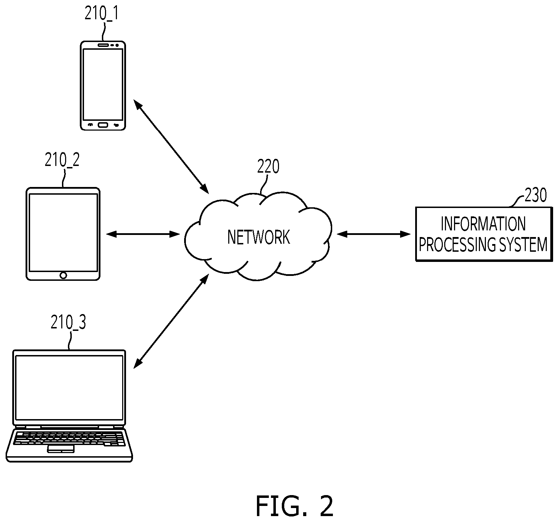

FIG. 2 is a schematic diagram showing a configuration in which an information processing system 230 is connected to a plurality of user terminals 210_1, 210_2 and 210_3 to generate a composite image according to an embodiment of the present disclosure. As shown in the drawing, multiple user terminals 210_1, 210_2 and 210_3 may be connected through a network 220 to the information processing system 230 capable of generating composite images. Here, the multiple user terminals 210_1, 210_2 and 210_3 may include a terminal of the user who receives a generated composite image.

In an embodiment, the information processing system 230 may include one or more server devices and/or databases that are capable of storing, providing, and executing computer-executable programs (e.g., downloadable applications) and data in association with generation of composite images, or one or more distributed computing devices and/or distributed databases based on cloud computing services.

The composite image provided by the information processing system 230 may be provided to the user through an image generation application web browser or web browser extension program installed on each of the plural user terminals 210_1, 210_2 and 210_3. For example, through the image generation application or the like, the information processing system 230 may provide information corresponding to a composite image generation request received from the user terminals 210_1, 210_2 and 210_3 or may perform corresponding processing.

The plural user terminals 210_1, 210_2 and 210_3 may communicate with the information processing system 230 through the network 220. The network 220 may be configured to enable communication between the plural user terminals 210_1, 210_2 and 210_3 and the information processing system 230. Depending on the installation environment, the network 220 may be composed of, for example, a wired network such as Ethernet, wired home network (power line communication), telephone line communication or RS-serial communication, a wireless network such as mobile communication network, wireless LAN (WLAN), Wi-Fi, Bluetooth or ZigBee, or a combination thereof. There are no restrictions on communication schemes, and both communication schemes utilizing communication networks that the network 220 can include (e.g., mobile communication network, wired Internet, wireless Internet, broadcasting network, satellite network) and short-range wireless communication between the user terminals 210_1, 210_2 and 210_3 may also be included.

In FIG. 2, a mobile phone terminal 210_1, a tablet terminal 210_2, and a PC terminal 210_3 are shown as examples of user terminals; but without being limited thereto, the user terminals 210_1, 210_2 and 210_3 may be any computing device that is capable of wired and/or wireless communication and capable of installing and executing an image generation service application or web browser. For example, user terminals may include an AI speaker, a smartphone, a mobile phone, a navigation aid, a computer, a laptop, a digital broadcasting terminal, a personal digital assistant (PDA), a portable multimedia player (PMP), a tablet PC, a game console, a wearable device, an Internet-of-things (IoT) device, a virtual reality (VR) device, an augmented reality (AR) device, and a set-top box. In addition, in FIG. 2, three user terminals 210_1, 210_2 and 210_3 are shown as communicating with the information processing system 230 through the network 220. But without being limited thereto, a different number of user terminals may be configured to communicate with the information processing system 230 over the network 220.

In FIG. 2, a configuration is illustrated in which the user terminals 210_1, 210_2 and 210_3 communicate with the information processing system 230 to receive a generated composite image, but is not limited thereto. For example, the user terminals 210_1, 210_2 and 210_3 may directly generate a composite image without communicating with the information processing system 230.

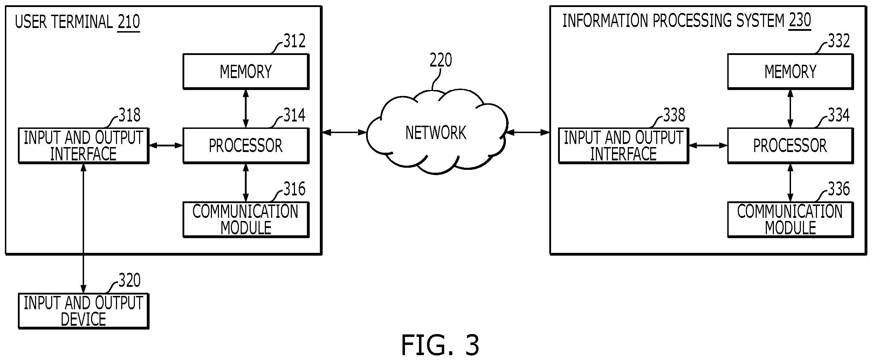

FIG. 3 is a block diagram showing the internal structure of the user terminal 210 and the information processing system 230 according to an embodiment of the present disclosure. The user terminal 210 may refer to any computing device capable of executing an application and web browser and capable of wired/wireless communication, and may include, for example, the mobile phone terminal 210_1, tablet terminal 210_2, and PC terminal 210_3 in FIG. 2. As shown, the user terminal 210 may include a memory 312, a processor 314, a communication module 316, and an input/output interface 318. Similarly, the information processing system 230 may include a memory 332, a processor 334, a communication module 336, and an input/output interface 338. As shown in FIG. 3, the user terminal 210 and the information processing system 230 may be configured to communicate information and/or data through the network 220 by using their communication modules 316 and 336. In addition, the input/output device 320 may be configured to input information and/or data to the user terminal 210 through the input/output interface 318 or to output information and/or data generated from the user terminal 210.

The memory 312 or 332 may include any non-transitory computer-readable recording medium. According to an embodiment, the memory 312 or 332 may include a permanent mass storage device such as read only memory (ROM), disk drive, solid state drive (SSD), or flash memory. As another example, a permanent mass storage device such as ROM, SSD, flash memory, or disk drive may be included in the user terminal 210 or the information processing system 230 as a separate permanent storage device that is distinct from the memory. In addition, the memory 312 or 332 may store an operating system and at least one program code.

These software components may be loaded from a computer-readable recording medium separate from the memory 312 or 332. This separate computer-readable recording medium may include a recording medium directly connectable to the user terminal 210 or the information processing system 230, and may include, for example, a computer-readable recording medium such as floppy drive, disk, tape, DVD/CD-ROM drive, or memory card. As another example, software components may be loaded onto the memory 312 or 332 through a communication module 316 or 336 other than a computer-readable recording medium. For example, at least one program may be loaded onto the memory 312 or 332 based on a computer program installed by files provided over the network 220 by developers or a file distribution system that distributes installation files for applications.

The processor 314 or 334 may be configured to process instructions of a computer program by performing basic arithmetic, logic, and input/output operations. These instructions may be provided to the processor 314 or 334 by the memory 312 or 332 or the communication module 316 or 336. For example, the processor 314 or 334 may be configured to execute received instructions according to a program code stored in a recording device such as the memory 312 or 332.

The communication modules 316 and 336 may provide a configuration or function for the user terminal 210 and the information processing system 230 to communicate with each other through the network 220, and may provide a configuration or function for the user terminal 210 and/or the information processing system 230 to communicate with other user terminals or other systems (e.g., separate cloud system). For example, a request or data (e.g., request to train the image generation model, or request to generate a composite image) generated by the processor 314 of the user terminal 210 according to a program code stored in a recording device such as the memory 312 may be transmitted through the network 220 to the information processing system 230 under the control of the communication module 316. In reverse, a control signal or command provided under the control of the processor 334 of the information processing system 230 may be transmitted through the communication module 336 over the network 220 and received by the user terminal 210 through the communication module 316 of the user terminal 210.

The input/output interface 318 may be a means for interfacing with the input/output device 320. As an example, input devices may include a device such as a camera including an audio sensor and/or an image sensor, a keyboard, a microphone, or a mouse, and output devices may include a device such as a display, a speaker, or a haptic feedback device. As another example, the input/output interface 318 may be a means for interfacing with a device whose structures or functions for performing input and output are integrated into one, such as a touchscreen. For example, when the processor 314 of the user terminal 210 processes instructions of a computer program loaded onto the memory 312, a service screen or the like composed based on information and/or data provided by the information processing system 230 or another user terminal may be displayed on the display through the input/output interface 318. In FIG. 3, the input/output device 320 is shown as not being included in the user terminal 210, but without being limited thereto, it may be configured to be integrated with the user terminal 210. In addition, the input/output interface 338 of the information processing system 230 may be a means for interfacing with a device (not shown) for input or output that is capable of being connected to or included in the information processing system 230. In FIG. 3, the input/output interface 318 or 338 is shown as being configured separately from the processor 314 or 334, but without being limited thereto, the input/output interface 318 or 338 may be configured to be included in the processor 314 or 334.

The user terminal 210 or the information processing system 230 may include more components than those shown in FIG. 3. However, there may be no need to clearly show most related-art components. In an embodiment, the user terminal 210 may be implemented to include at least some of the input/output devices 320 described above. In addition, the user terminal 210 may further include other components such as a transceiver, a global positioning system (GPS) module, a camera, various sensors, and a database.

While the program for image generation model training or image generation application is running, the processor 314 may receive text, image, video, voice, and/or action through input devices such as a touchscreen, keyboard, camera including an audio sensor and/or an image sensor, and a microphone connected to the input/output interface 318, and may store the received text, image, video, voice, and/or action in the memory 312 or provide the same to the information processing system 230 through the communication module 316 over the network 220.

The processor 314 of the user terminal 210 may be configured to manage, process, and/or store information and/or data received from the input/output device 320, another user terminal, the information processing system 230, and/or a plurality of external systems. The information and/or data processed by the processor 314 may be provided through the communication module 316 to the information processing system 230 over the network 220. The processor 314 of the user terminal 210 may transmit information and/or data through the input/output interface 318 to the input/output device 320 to output the same. For example, the processor 314 may output or display the received information and/or data on the screen of the user terminal 210.

The processor 334 of the information processing system 230 may be configured to manage, process, and/or store information and/or data received from a plurality of user terminals 210 and/or a plurality of external systems. The information and/or data processed by the processor 334 may be provided through the communication module 336 to the user terminal 210 over the network 220.

FIG. 4 is a diagram illustrating an example of a method for generating input images 430_1 and 430_2 by merging object images 410 and background images 420 according to an embodiment of the present disclosure. In an embodiment, the processor may receive an object image 410. Specifically, the processor may receive an object image 410 to be included in the input images 430_1 and 430_2. Here, the object image 410 may be an image of an object associated with the defense industry (e.g., battleship, fighter plane, tank, or helicopter). The object images 410 may include images of various domain styles. For example, the object images 410 may include a black and white real-world domain style image, a color real-world domain style image, an illustration domain style image, an oil painting domain style image, a 3D modeling style image, or the like. Since object images of various domain styles are usable, it is possible to utilize various object images related to the defense industry.

Alternatively or additionally, the processor may generate and store an object image data set including a plurality of object images 410 in advance. Thereafter, the processor may retrieve object images 410 to be included in the input images 430_1 and 430_2 from the stored object image data set.

In an embodiment, the processor may receive a background image 420. Here, the background image 420 may be an image of a background (e.g., sea or sky) to be combined with the received object image 410. The background images 420 may include images of various domain styles. For example, the background images 420 may include a black and white real-world domain style image, a color real-world domain style image, an illustration domain style image, an oil painting domain style image, a 3D modeling style image, and the like. Since background images of various domain styles are usable, it is possible to utilize various background images.

As described above, the processor may generate and store a background image data set including a plurality of background images 420 in advance, and may retrieve a background image 420 to be included in the input images 430_1 and 430_2 from the stored background image data set.

In an embodiment, the processor may merge the object image 410 and the background image 420 to generate the input images 430_1 and 430_2. Specifically, the processor may merge the object image 410 at a specific position inside the received background image 420. Here, the input images 430_1 and 430_2 may be generated by, but not limited to, an auto-stitching scheme that automatically maps the object image 410 to the background image 420. For example, the input images 430_1 and 430_2 may be generated by a scheme in which a real person designates a position to place the object image 410 within the background image 420. As another example, the input images 430_1 and 430_2 may be generated by using an artificial neural network model that places (including resizing, rotating, or translating) the object image 410 in an optimal position within the background image 420.

In an embodiment, the domain styles of the received object image 410 and the received background image 420 may be different from each other. For example, the object image 410 may be a virtual image generated through a computer game or computer simulation, and the background image 420 may be a real image such as an actual image captured by a camera in a real environment. In this case, the processor may generate the input images 430_1 and 430_2 by merging the object image 410 and the background image 420 of different domain styles as they are.

In FIG. 4, only an example of merging one object image 410 and one background image 420 to generate input images 430_1 and 430_2 is shown, but the number of object images 410 included in the input images 430_1 and 430_2 is not limited thereto. For example, the processor may place multiple object images 410 on a single background image. Additionally, the processor may generate the input images 430_1 and 430_2 by merging the background image 420 and the object image 410 so that multiple object images 410 are appropriately placed at specific positions.

FIG. 5 is a diagram illustrating an example of a method for generating input images 540_1 to 540_3 by using an artificial neural network model 530 according to another embodiment of the present disclosure. In an embodiment, the processor may receive object information 510 associated with an object within the input images 540_1 to 540_3 to be generated. The object information 510 may include object type information 512, object shape information 514, object location information 516, and object posture information 518. For example, at least some of the object information 510 may be text information.

In an embodiment, the object type information 512 may be information about the type of an object to be included in the input images 540_1 to 540_3 to be generated. Here, the object type information 512 may be information that classifies objects related to the defense industry according to their object types. For example, the object type information 512 may include, but not limited to, identifiers associated with a battleship, a fighter plane, a tank, and a helicopter. Additionally or alternatively, the object type information 512 may include information classified in more detail according to the usage, manufacturer, model name, and the like of the objects.

In an embodiment, the object shape information 514 may be information about the specific shape of an object to be included in the input images 540_1 to 540_3 to be generated. For example, the object shape information 514 may include information about the shape of an object that varies depending on camera parameters. For instance, it may include information about the shape of an object, which varies depending on the angle of view, the type of lens (e.g., telephoto lens or normal lens), or the like of the camera that captures the object.

In an embodiment, the object location information 516 may refer to information about the position of an object to be included in the input images 540_1 to 540_3. For example, the object location information 516 may be defined to be three-dimensional coordinates in a three-dimensional coordinate system with the position of the camera photographing the object in the input images 540_1 to 540_3 as the origin. Alternatively, the object location information 516 may be represented as a vertical distance and/or a horizontal distance from the camera that captures the object in the input images 540_1 to 540_3 to the object. As another example, the object location information 516 may be represented as a straight-line distance from a specific reference point or reference line (e.g., sea level of the sea) within the background, two-dimensional coordinates, or the like. That is, it may include all information that can indicate the location of an object in the input images 540_1 to 540_3.

In an embodiment, the object posture information 518 may refer to information about the posture, rotation angle, orientation, or the like of the object to be included in the input images 540_1 to 540_3. For example, the object posture information 518 may include information about the angle by which the object is rotated around the object's principal axes (e.g., X-axis, Y-axis, and Z-axis).

In an embodiment, the processor may receive background information 520 associated with a background within the input images 540_1 to 540_3 to be generated. For example, at least some of the background information 520 may be text information. The background information 520 may include information classified according to the type of the background. In addition, the background information 520 may include information about the background to be combined with an object related to the defense industry. For example, the background information 520 may include **a depiction of** the sky, the sea, or the like. Additionally or alternatively, the background information 520 may include, but not limited to, information classified in detail by weather, time, place, or the like.

In an embodiment, the object information 510 and the background information 520 may be text information that can be expressed in various languages. For example, the object type information 512 may be text information about an object type such as "battleship", "fighter plane", "tank", or "helicopter". In addition, the background information 520 may be text information about a background type such as "sea", or "sky".

In an embodiment, the processor may input the received object information 510 and background information 520 to the artificial neural network model 530. The artificial neural network model 530 may generate the input images 540_1 to 540_3 based on the input object information 510 and background information 520. Specifically, the artificial neural network model 530 may generate the input images 540_1 to 540_3 including an object image associated with the input object information 510 and a background image associated with the input background information 520.

In FIG. 5, the artificial neural network model 530 is illustrated as generating the input images 540_1 to 540_3 based on the object type information 512, object shape information 514, object location information 516, object posture information 518, and background information 520, but the information received by the artificial neural network model 530 is not limited thereto. For example, to generate the input images 540_1 to 540_3, the artificial neural network model 530 may receive additional information associated with the object in addition to the object type information 512, object shape information 514, object location information 516, and object posture information 518.

Additionally or alternatively, the artificial neural network model 530 may generate the input images 540_1 to 540_3 by using some of the object type information 512, object shape information 514, object location information 516, object posture information 518, and background information 520. That is, the artificial neural network model 530 may generate the input images 540_1 to 540_3 without receiving some of the illustrated pieces of information 512, 514, 516, 518 and 520. In this case, the artificial neural network model 530 may generate optimal input images 540_1 to 540_3 based on the received information. For example, even if the artificial neural network model 530 receives the object type information 512 only, it may generate input images 540_1 to 540_3 by inferring background information in which an object corresponding to the object type information 512 may be present and/or the optimal location and posture of the object in the background.

With respect to the input images 540_1 to 540_3 in FIG. 5, even when receiving the same object type information 512 and the same background information 520, the artificial neural network model 530 may generate various input images 540_1 to 540_3 by appropriately modifying the object shape information 514, object location information 516, object posture information 518, or the like. Through this configuration, it is possible to configure detailed settings for objects and backgrounds to be included in the input images 540_1 to 540_3, and the artificial neural network model 530 may generate the input images 540_1 to 540_3 for a nearly infinite number of desired scenarios.

FIG. 6 is a diagram illustrating an example of training (630) an image generation model 640 according to an embodiment of the present disclosure. In an embodiment, the image generation model 640 may be trained (630) based on a training image 610 of a specific domain style. Specifically, the image generation model 640 may be trained based on a pair composed of a training image 610 of a specific domain style and content information 620 extracted (612) from the training image 610 of a specific domain style.

In an embodiment, the processor may receive a training image 610 of a specific domain style for training (630) the image generation model 640. Here, the training image 610 of a specific domain style may be an IR style image. Additionally or alternatively, training images of various domain styles other than the IR style may be utilized.

In an embodiment, the processor may extract (612) at least one piece of content information 620 from the training image 610 of a specific domain style. For example, the content information 620 may include at least one of semantic segmentation information, panoptic segmentation information, instance segmentation information, SAM result information, bounding box information, edge information, depth information, or sketch information. In this case, the processor may construct a training data set by using a pair composed of a training image 610 of a specific domain style and content information 620 extracted from the training image 610 of a specific domain style. Thereafter, the image generation model 640 may be trained (630) based on the constructed training data set.

According to an embodiment, the processor may extract (612) multiple different pieces of content information 620 from a training image 610 of a specific domain style. Specifically, the processor may extract (612) first to n^{th} content information (n is a natural number greater than or equal to 2) from the training image 610 of a specific domain style. For example, from the training image 610 of a specific domain style, the processor may extract (612) semantic segmentation information as first content information, extract (612) sketch information as second content information, and extract (612) edge information as third content information.

In an embodiment, the processor may construct a training data set by using a pair composed of a training image 610 of a specific domain style and multiple pieces of content information 620 extracted (612) from the training image 610 of a specific domain style. For example, the processor may construct the first training data set by using a pair composed of a training image 610 of a specific domain style and first content information extracted (612) from the training image 610 of a specific domain style. Additionally, the processor may construct the n^{th} training data set by using a pair composed of a training image 610 of a specific domain style and n^{th} content information extracted (612) from the training image 610 of a specific domain style.

In an embodiment, the processor may train (630) a plurality of image generation models 640 based on multiple different pieces of content information 620 extracted (612) from the training image 610 of a specific domain style. Specifically, the processor may train (630) the plural image generation models 640 on the basis of multiple different training data sets of pairs composed of a training image 612 of a specific domain style and different pieces of content information 620 extracted (612) from the training image 610 of a specific domain style. For example, the first image generation model may be trained (630) based on the first training data set composed of a pair of a training image 610 of a specific domain style and semantic segmentation information extracted (612) from the training image 610 of a specific domain style. Additionally, the second image generation model may be trained (630) based on the second training data set composed of a pair of a training image 610 of a specific domain style and sketch information extracted (612) from the training image 610 of a specific domain style. That is, multiple training data sets may be constructed based on multiple different pieces of content information 620 extracted (612) from the training images 610, and multiple image generation models 640 may be trained (630) based on the individual multiple training data sets. In this case, when generating a composite image, the processor may generate a single composite image by ensembling pieces of information generated by the individual image generation models 640.

Alternatively, the processor may train a single image generation model 640 based on multiple different pieces of content information 620 extracted (612) from a training image 610 of a specific domain style. Specifically, the processor may extract (612) multiple different pieces of content information 620 from a training image 610 of a specific domain style. Then, the processor may generate one piece of content information by superimposing (or, stitching) the different pieces of content information 620. For example, the processor may extract (612) semantic segmentation information, sketch information, and Canny edge information from the training image 610 of a specific domain style, and superimpose (or, stitch) the extracted pieces of content information 620 to generate a single integrated piece of content information. In this case, it is possible to generate a single integrated piece of content information that includes all information specific to the individual pieces of content information 620. Thereafter, one image generation model 640 may be trained (630) based on a pair composed of the training image 610 of a specific domain style and the integrated piece of content information.

In an embodiment, the received training image 610 of a specific domain style may include multiple training images. In this case, the multiple training images may all be images of the same domain style (e.g., IR style). Additionally, the processor may extract (612) at least one piece of content information 620 from each of the multiple training images. Further, the processor may construct a training data set and train the image generation model 640 based on the multiple training images and at least one piece of content information extracted (612) from each of the training images.

Through this configuration, the image generation model 640 may generate a high-quality composite image that is not dependent on only one piece of content information 620 by extracting multiple pieces of content information 620 of different formats/types from one training image 610. In addition, it is possible to generate composite images that reflect various pieces of content information 620 including both high-level structural information and low-level structural information.

FIG. 7 is a diagram illustrating an example of training an image generation model 740 according to an embodiment of the present disclosure. In FIG. 7, the example of training the image generation model 430 described with reference to FIG. 6 will be described using a specific image.

In an embodiment, the image generation model 740 may be trained (730) based on a training image 710 of a specific domain style. Specifically, the image generation model 740 may be trained (730) based on a training image 710 of a specific domain style and content information 720 extracted (712) from the training image 710 of a specific domain style.

In an embodiment, for training (730) the image generation model 740, the processor may receive a training image 710 of a specific domain style. As illustrated, the training image of a specific domain style may be, but not limited to, an IR style image.

In an embodiment, the processor may extract (712) at least one piece of content information 720 from the received training image 710 of a specific domain style. FIG. 7 illustrates a case where Canny edge information is extracted from the training image 710 of a specific domain style, but the type and number of pieces of extracted content information are not limited thereto. For example, the processor may extract (712) at least one of semantic segmentation information, panoptic segmentation information, instance segmentation information, SAM result information, bounding box information, edge information, depth information, or sketch information from a training image 710 of a specific domain style. In addition, the processor may extract (712) multiple different pieces of content information 720 from a training image 710 of a specific domain style.

In an embodiment, the processor may train (730) the image generation model 740 based on a training image 710 of a specific domain style and content information 720 extracted (712) from the training image 710 of a specific domain style. Specifically, the processor may construct a training data set by using a pair composed of a training image 710 of a specific domain style and at least one piece of content information 720 extracted (712) from the training image 710 of a specific domain style. Thereafter, the processor may train (730) the image generation model 740 based on the constructed training data set.

In FIG. 7, the image generation model 740 is shown as being trained based on a single training image 710 of a specific domain style, but the training image 710 of a specific domain style may include multiple training images. In this case, the multiple training images may all be images of the same domain style.

Through this configuration, the image generation model 740 may be trained to generate a composite image of a specific domain style by using the content information as input. For example, the image generation model 740 having been trained (730) based on an IR-style training image 710 and content information 720 extracted (712) from the IR-style training image 710 may generate an IR-style composite image based on given content information. Consequently, the image generation model 740 may generate an IR-style composite image similar to one captured directly by a military infrared camera.

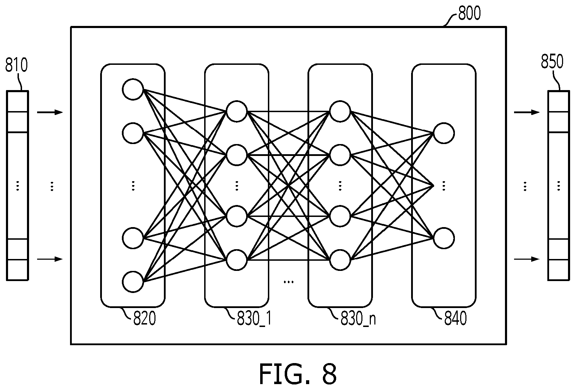

FIG. 8 is a diagram showing an example of an artificial neural network model 800 according to an embodiment of the present disclosure. The artificial neural network model 800 is an example of a machine learning model, and is a statistical learning algorithm implemented based on the structure of a biological neural network or a structure that executes the algorithm, in machine learning technology and cognitive science.

According to an embodiment, the artificial neural network model 800 may represent a machine learning model having a problem-solving capability through a learning process in which nodes, which are artificial neurons that form a network by combining synapses like in a biological neural network, repeatedly adjust the weights of synapses so that the error between the correct output corresponding to a specific input and the inferred output is reduced. For example, the artificial neural network model 800 may include a probability model, neural network model, or the like used in artificial intelligence learning methods such as machine learning and deep learning.

According to an embodiment, the image generation model described above may be generated in the form of an artificial neural network model 800. For example, the artificial neural network model 800 may receive at least one piece of content information extracted from the input image and generate a composite image of a specific domain style associated with the received content information.

The artificial neural network model 800 may be implemented as a multilayer perceptron (MLP) composed of nodes in multiple layers and connections between them. The artificial neural network model 800 according to the present embodiment may be implemented by using one of various artificial neural network model structures including an MLP. As illustrated in FIG. 8, the artificial neural network model 800 may be composed of an input layer 820 that receives an input signal or data 810 from the outside, an output layer 840 that outputs an output signal or data 850 corresponding to the input data, and n (n is a positive integer) hidden layers 830_1 to 830_n that are located between the input layer 820 and the output layer 840 and are configured to receive a signal from the input layer 820, extract a characteristic, and transfer it to the output layer 840. Here, the output layer 840 may receive a signal from the hidden layers 830_1 to 830_n and output it to the outside.

The learning method of the artificial neural network model 800 may include a supervised learning method that trains to optimize problem solving by receiving a teacher signal (correct answer), and an unsupervised learning method that does not require a teacher signal. According to an embodiment, the information processing system may train the artificial neural network model 800 by using a training image of a specific domain style and at least one piece of content information extracted from the training image. According to an embodiment, the information processing system may directly generate training data for training the artificial neural network model 800.

According to an embodiment, the input variable of the artificial neural network model 800 may include at least one piece of content information extracted from the input image. When the input variable described above is input through the input layer 820, the output variable output from the output layer 840 of the artificial neural network model 800 may be a composite image of a specific domain style.

In this way, multiple input variables and corresponding multiple output variables may be matched respectively to the input layer 820 and the output layer 840 of the artificial neural network model 800, and the synapse values between the nodes included in the input layer 820, the hidden layers 830_1 to 830_n, and the output layer 840 may be adjusted, so that training can be performed so as to extract a correct output corresponding to a specific input. Through this training process, the characteristics hidden in the input variables of the artificial neural network model 800 may be identified, and the synapse values (or weights) between the nodes of the artificial neural network model 800 may be adjusted so that the error between the output variables calculated based on the input variables and the target output is reduced.

In an embodiment, the artificial neural network model 800 may be a generative model. The generative model may be a generative adversarial network (GAN) model, a diffusion model, a variational autoencoder (VAE) model, a flow-based generative model, or the like.

In an embodiment, the image generation model may be a generative adversarial network (GAN) model. Here, the GAN model may refer to a machine learning model including a generator and a discriminator. The generator may be trained with a method for generating composite data samples by taking random noise as input and gradually improving its ability to generate realistic samples similar to the training data. The discriminator may act as a binary classifier that is trained with a method for distinguishing between a real sample and a fake sample. The GAN model aims to train the generator that can generate a high-quality sample that the discriminator cannot distinguish from real data, through an adversarial training process. For example, the information processing system may train the generator of the image generation model so as to minimize the loss between the training image being the correct answer data and the training image output from the generator of the image generation model. In addition, the information processing system may train the discriminator of the image generation model so as to minimize the loss between the authenticity of the training image being the correct answer data and the authenticity determination result of the training image output from the discriminator of the image generation model.

In an embodiment, the image generation model may be a diffusion model. Here, the diffusion model may refer to a generative model that is trained with a method for generating a high-quality sample by repeatedly applying a series of noise injection and diffusion to a given initial data sample. By performing the diffusion steps in reverse, the diffusion model may generate a real sample from random noise. For example, the information processing system may train the image generation model so as to generate a high-quality composite image by repeatedly applying a series of noise injection and diffusion to a training image.

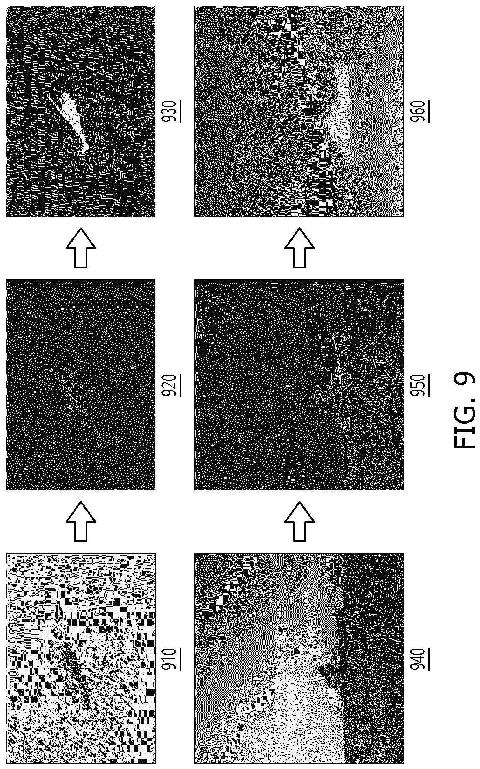

FIG. 9 is a diagram illustrating an example of an IR style composite image 930 or 960 generated from an input image 910 or 940 according to an embodiment of the present disclosure. In an embodiment, the processor may receive an input image 910 or 940. Here, the input image 910 or 940 may be an image including a specific object and background related to the defense industry. The processor may receive a previously generated input image 910 or 940 or directly generate an input image 910 or 940. Here, the object and background included in the input image 910 or 940 may be images of different domain styles.

In an embodiment, the processor may extract at least one piece of content information 920 or 950 from the input image 910 or 940. In addition, the processor may extract multiple different pieces of content information 920 or 950 from the input image 910 or 940. In FIG. 9, semantic segmentation information, sketch information, and edge information extracted from the input image 910 or 940 are visualized on a single image in an overlapping form, but each piece of content information 920 or 950 may be present as an independent layer.

In an embodiment, the image generation model may generate an IR-style composite image 930 or 960 by using the extracted content information 920 or 950 as input. In this case, the image generation model may be a model trained to generate an IR-style composite image 930 or 960 by using the content information 920 or 950 as input. Specifically, the image generation model may be a model trained based on a pair composed of an IR-style training image and at least one piece of content information extracted from the IR-style training image. Hence, the image generation model may generate an IR-style composite image 140 regardless of the domain style of the input image 910 or 940. When the image generation model generates an IR-style composite image based on multiple pieces of content information, the multiple pieces of content information may be superimposed (or, stitched) together and input to the image generation model.

Through this configuration, the image generation model may generate a composite image 930 or 960 similar to an actual photograph of an object and background related to the defense industry captured by a military infrared camera. In particular, according to the characteristics of an IR style image, even if an input image 910 or 940 including an object or background image of a non-real-world domain style (e.g., illustration style, oil painting style, cartoon style, etc.) is used, a composite image 930 or 940 similar to a real image may be obtained. The composite image 140 generated in this way may be used as training data for an AI model used in the defense industry.

In addition, when generating an input image 910 or 940, object images and background images of different domain styles can be used, so that a large number of input images can be generated by combining object images and background images in various ways. Since the image generation model generates IR composite images based on the content information, it can generate natural IR composite images even when input images including object and background images of different domain styles are used.

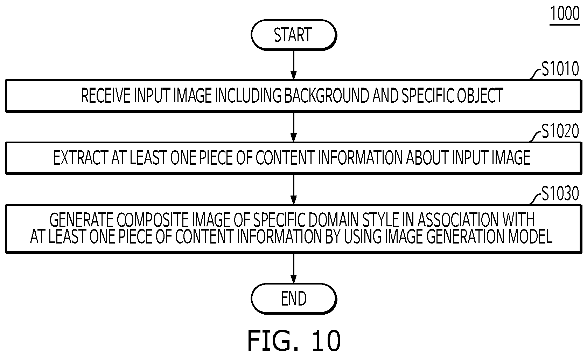

FIG. 10 is a flowchart illustrating an example of an image generation method 1000 according to an embodiment of the present disclosure. In an embodiment, the method 1000 may be performed by at least one processor of a user terminal and/or an information processing system. The method 1000 may be initiated by the processor that receives an input image including a background and a specific object (S1010). Specifically, the step of receiving an input image may include a step of receiving a first image associated with the background, a step of receiving a second image associated with a specific object, and a step of merging the first image and the second image to generate the input image. Here, the specific object may be an object associated with the defense industry.

Alternatively, the step of receiving an input image may include a step of receiving background information associated with a background, a step of receiving object information associated with a specific object, and a step of generating the input image based on the background information and the object information by using an artificial neural network model. Here, the object information may include at least one of object type information, object shape information, object location information, or object posture information.

Thereafter, the processor may extract at least one piece of content information about the input image (S1020). Here, the content information may represent structural information of the background and objects in the input image. For example, the at least one piece of content information may include at least one of semantic segmentation information, panoptic segmentation information, instance segmentation information, segmentation anything model (SAM) result information, bounding box information, edge information, depth information, or sketch information.

The step of extracting content information may include a step of extracting multiple different pieces of content information about the input image. Here, the multiple different pieces of content information may include first content information, second content information, and third content information. Additionally, the first content information may be semantic segmentation information, the second content information may be sketch information, and the third content information may be edge information.

Thereafter, the processor may generate a composite image of a specific domain style in association with at least one piece of content information by using an image generation model (S1030). The step of generating a composite image may include a step of generating the composite image based on multiple different pieces of content information by using the image generation model. The step of generating the composite image based on multiple different pieces of content information may include a step of encoding first content information to generate first encoded data, a step of encoding second content information to generate second encoded data, a step of encoding third content information to generate third encoded data, and a step of inputting the first encoded data, the second encoded data, and the third encoded data to the image generation model to generate the composite image of a specific domain style. Here, the specific domain style may be an infrared (IR) domain style.

The method 1000 may further include a step of training the image generation model. The step of training the image generation model may include a step of receiving a training image of a specific domain style, a step of extracting at least one piece of content information about the training image, and a step of training the image generation model by using a pair composed of the training image and the at least one piece of content information as training data.

In an embodiment, the domain styles of the background and specific object included in the input image may be different from each other. Additionally, at least one of the domain styles of the background and specific object included in the input image may be different from the domain style of the composite image.

The flowchart of FIG. 10 and related descriptions are only illustrative, and the scope of the present disclosure is not limited thereto. For example, at least one step may be added/changed/deleted, or the order of steps may be changed.

The above-described method may be provided as a computer program stored in a computer-readable recording medium for execution on a computer. Media may be used to continuously store programs executable on a computer or to temporarily store them for execution or download. Additionally, the media may be a variety of recording or storage means in the form of a single piece of hardware or a combination of several pieces of hardware, and the media may be directly connected to a certain computer system or may be distributed over a network. Examples of the media may include magnetic media such as a hard disk, floppy disk and magnetic tape, optical recording media such as CD-ROM and DVD, magneto-optical media such as floptical disk, ROM, RAM, flash memory, which may be configured to store program instructions. Additionally, examples of other media may include recording or storage media managed by app stores that distribute applications, or by sites or servers that supply or distribute various other software.

The methods, operations, or techniques of the present disclosure may be implemented with various means. For example, these techniques may be implemented in hardware, firmware, software, or a combination thereof. Those skilled in the art will understand that the various illustrative logical blocks, modules, circuits, and algorithm steps described in connection with the present disclosure may be implemented in electronic hardware, computer software, or a combination thereof. To clearly illustrate this mutual replacement between hardware and software, various illustrative components, blocks, modules, circuits, and steps have been described above generally in terms of their functionality. Whether such functionality is implemented in hardware or software depends on the specific application and design requirements imposed on the overall system. Those skilled in the art may implement the described functionality in various ways for specific applications, but such implementations should not be construed as departing from the scope of the present disclosure.

In hardware implementation, the processing units used to perform the techniques may be implemented with one or more ASICs, DSPs, GPUs, digital signal processing devices (DSPDs), programmable logic devices (PLDs), field programmable gate arrays (FPGAs), processors, controllers, microcontrollers, microprocessors, electronic devices, other electronic units designed to perform the functions described in this disclosure, computers, or a combination thereof.

Thus, the various example logical blocks, modules, and circuits described in connection with the present disclosure may be implemented with or performed by general-purpose processors, DSPs, ASICs, FPGAs, programmable logic devices, discrete gates, transistor logics, discrete hardware components, or any combination thereof designed to perform the functions described herein. A general-purpose processor may be a microprocessor, but alternatively, the processor may be any conventional processor, controller, microcontroller, or state machine. The processors may also be implemented as a combination of computing devices, such as a DSP and a microprocessor, a plurality of microprocessors, one or more microprocessors in conjunction with a DSP core, or any other configurations.

In firmware and/or software implementation, the techniques may be implemented as instructions stored in a computer-readable medium such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), or magnetic or optical data storage device. The instructions may be executable by one or more processors, and may cause the processor(s) to perform certain aspects of the functionality described in the present disclosure.

When implemented in software, the techniques may be stored in or transmitted through computer-readable media as one or more instructions or code. The computer-readable media include both computer storage media and communication media by including any media that facilitate transfer of a computer program from one place to another. The storage media may be any available media that can be accessed by a computer. By way of non-limiting examples, these computer readable media may include RAM, ROM, EEPROM, CD-ROM or other optical disk storage, magnetic disk storage or other magnetic storage devices, or any other media that may be used to transport or store desired program codes in the form of instructions or data structures and may be accessed by a computer. In addition, random access may be suitably made to computer-readable media.

For example, if software is transmitted from a website, server, or other remote source by using coaxial cable, fiber optic cable, twisted pair cable, digital subscriber line (DSL), or wireless technologies such as infrared ray, radio wave, and microwave, these coaxial cable, fiber optic cable, twisted pair cable, digital subscriber line, or wireless technologies such as infrared ray, radio wave, and microwave may be included in the definition of media. As used herein, disks and discs include CD, laser disc, optical disc, digital versatile disc (DVD), floppy disk, and Blu-ray disc, where disks usually reproduce data magnetically, whereas discs reproduce data optically using lasers. Combinations of the above ones should also be included in the scope of computer-readable media.

Software modules may be configured to reside in RAM memory, flash memory, ROM memory, EPROM memory, EEPROM memory, registers, hard disk, removable disk, CD-ROM, or any other form of well-known storage medium. An exemplary storage medium may be coupled to a processor so that the processor may read information from or write information to the storage medium. The processor and storage medium may be present within an ASIC. The ASIC may be present in a user terminal. Alternatively, the processor and storage medium may be present as separate components in the user terminal.

Although the above-described embodiments have been described as utilizing aspects of the subject matter disclosed herein on one or more standalone computer systems, the disclosure is not limited thereto and may also be implemented in conjunction with any computing environment such as a network or distributed computing environment. Furthermore, aspects of the subject matter of this disclosure may be implemented with multiple processing chips or devices, and storage may be similarly effected across the multiple devices. These devices may include PCs, network servers, and portable devices.

Although the present disclosure has been described in relation to some embodiments in this specification, various modifications and changes may be made without departing from the scope of the present disclosure as can be understood by those skilled in the art to which the invention pertains. In addition, such modifications and changes should be considered to fall within the scope of the claims attached herein.

## Claims

1. A method performed by at least one processor for generating a composite image, the method comprising:
receiving an input image including a background and a specific object;
extracting at least one piece of content information about the input image; and
generating a composite image of a specific domain style associated with the at least one piece of content information by using an image generation model.

2. The method as claimed in claim 1, wherein receiving an input image comprises:
receiving a first image associated with the background;
receiving a second image associated with the specific object; and
generating the input image by merging the first image and the second image.

3. The method as claimed in claim 1, wherein receiving an input image comprises:
receiving background information associated with the background;
receiving object information associated with the specific object; and
generating the input image based on the background information and the object information by using an artificial neural network model.

4. The method as claimed in claim 3, wherein the object information includes at least one of object type information, object shape information, object location information, or object posture information.

5. The method as claimed in claim 1, wherein the content information represents structural information of the background and objects in the input image.

6. The method as claimed in claim 5, wherein the at least one piece of content information includes at least one of semantic segmentation information, panoptic segmentation information, instance segmentation information, segmentation anything model (SAM) result information, bounding box information, edge information, depth information, or sketch information.

7. The method as claimed in claim 1, wherein:
extracting at least one piece of content information comprises
extracting multiple different pieces of content information about the input image; and
generating a composite image comprises
generating the composite image based on the multiple different pieces of content information by using the image generation model.

8. The method as claimed in claim 7, wherein:
the multiple different pieces of content information include first content information, second content information, and third content information; and
generating the composite image based on the multiple different pieces of content information comprises
encoding the first content information to generate first encoded data;
encoding the second content information to generate second encoded data;
encoding the third content information to generate third encoded data; and
generating the composite image of the specific domain style by inputting the first encoded data, the second encoded data, and the third encoded data to the image generation model.

9. The method as claimed in claim 8, wherein:
the first content information is semantic segmentation information;
the second content information is sketch information; and
the third content information is edge information.

10. The method as claimed in claim 1, wherein a domain style of the background and a domain style of the specific object included in the input image are different from each other.

11. The method as claimed in claim 1, wherein at least one of a domain style of the background and a domain style of the specific object included in the input image is different from a domain style of the composite image.

12. The method as claimed in claim 1, further comprising
training the image generation model, and
wherein training the image generation model comprises:
receiving a training image of the specific domain style;
extracting at least one piece of content information about the training image; and
training the image generation model by using a pair composed of the training image and the at least one piece of content information as training data.

13. The method as claimed in claim 1, wherein the specific domain style is an infrared (IR) domain style.

14. The method as claimed in claim 1, wherein the specific object is an object associated with the defense industry.

15. An information processing system acting as an image generation system, comprising:
a communication module;
a memory; and
a processor connected to the memory and configured to execute at least one computer-readable program stored in the memory,
wherein the at least one computer-readable program includes instructions that are configured to:
receive an input image including a background and a specific object;
extract at least one piece of content information about the input image; and
generate a composite image of a specific domain style associated with the at least one piece of content information by using an image generation model.
